# FASCICULE DE BREVET EUROPEEN

(11) **EP 0 750 087 B1**
(45) Date de publication et mention de la délivrance du brevet: **29.12.1999**
(21) Numéro de dépôt: 96400974.0
(22) Date de dépôt: 07.05.1996
(51) Int. Cl.: E05B 63/12, B60N 2/00

(54) **Verrou perfectionné destiné notamment à la fixation d'un siège pour véhicule automobile sur un plancher de ce véhicule**
Verbesserte Verriegelung, insbesondere zum Befestigen eines Autositzes am Kraftfahrzeugboden
Improved lock, in particular for fixing a carseat to the carfloor

(30) Priorité: 23.06.1995 FR 9507605
(43) Date de publication de la demande: 27.12.1996
(73) Titulaire: CESA COMPAGNIE EUROPEENNE DE SIEGES POUR AUTOMOBILES, 92307 Levallois-Perret Cédex (FR)
(72) Inventeur: Millet, Dominique, 45290 Nogent sur Vernisson (FR); Royant, Claude, 78650 Beynes (FR)
(74) Mandataire: Moncheny, Michel

(56) Documents cités:
- EP-A- 0 605 270
- EP-A- 0 716 950
- FR-A- 536 447
- FR-A- 2 319 758
- FR-A- 2 699 973
- GB-A- 644 171
- US-A- 4 900 182

## Description

La présente invention concerne un verrou perfectionné destiné notamment à la fixation d'un siège pour véhicule automobile sur un plancher de ce véhicule.

On connaît déjà dans l'état de la technique, un verrou du type comprenant un pêne comportant un corps de verrouillage de forme générale cylindrique destiné à être verrouillé par encliquetage dans un orifice de verrouillage ménagé entre deux faces opposées d'une gâche, le pêne comportant de plus des moyens d'encliquetage libérables comprenant, d'une part, une douille d'appui axial munie d'une première extrémité d'appui destinée à coopérer avec une première face de la gâche et d'une seconde extrémité de blocage destinée à coopérer avec des moyens de blocage portés par le corps de verrouillage, et d'autre part, au moins une bille de verrouillage escamotable destinée à coopérer avec la seconde face de la gâche, la douille d'appui étant montée coulissante axialement autour du corps de verrouillage en étant déplaçable à l'encontre d'une force élastique de rappel depuis une position de libération du pêne, dans laquelle la douille recouvre la bille en la retenant en position escamotée, vers une position de verrouillage du pêne, dans laquelle la douille et la bille enserrent la gâche.

Un verrou de ce type est décrit par exemple dans FR-A-2 699 973. Dans cet exemple, la seconde extrémité de blocage de la douille est destinée à coopérer avec des moyens de blocage comportant un épaulement ménagé dans le corps de verrouillage. Par ailleurs, le corps de verrouillage comporte plusieurs billes de verrouillage espacées angulairement. Lorsque le pêne est verrouillé, l'épaulement de blocage impose un écart précis entre la douille d'appui et les billes de verrouillage de manière qu'il n'existe aucun jeu entre ces éléments et la gâche qu'ils enserrent.

Un verrou du type précité permet notamment d'accrocher de façon amovible un siège sur le plancher de l'habitacle d'un véhicule automobile. Dans cette application, le verrou est agencé de manière que le pêne soit solidaire d'un pied du siège et la gâche soit solidaire du plancher.

Certains sièges amovibles, formant banquettes, comportent au moins deux pieds qui sont disposés aux deux extrémités latérales de la banquette et qui sont accrochés au plancher au moyen de verrous du type précité.

Du fait que la planéité d'un plancher de véhicule est généralement relativement grossière et que l'écart entre deux pieds latéraux d'une banquette est relativement important, il est nécessaire d'augmenter les tolérances mécaniques entre les moyens d'encliquetage des verrous (douille d'appui, billes de verrouillage) et les gâches correspondantes.

Ceci a pour inconvénient, lorsque les pênes sont verrouillés, de créer un jeu indésirable entre les gâches et les douilles d'appui que la force de rappel de ces douilles ne permet pas de supprimer.

L'invention a pour but de remédier à cet inconvénient en proposant un verrou permettant notamment la fixation sans jeu d'une banquette sur un plancher de véhicule de planéité relativement grossière.

A cet effet, l'invention a pour objet un verrou du type précité, caractérisé en ce que les moyens de blocage comprennent une bague de blocage vissée autour du corps de verrouillage, munie d'une face de blocage destinée à être serrée, lorsque le pêne est verrouillé, contre l'extrémité de blocage de la douille, par vissage de la bague.

Suivant d'autres caractéristiques de l'invention:
- le verrrou comporte des moyens de déplacement radial de la bille de verrouillage entre une position escamotée de libération du pêne et une position saillante de verrouillage de ce pêne vers laquelle la bille est sollicitée élastiquement et dans laquelle la bille coopère avec la seconde face de la gâche, et des moyens d'interdiction de l'actionnement des moyens de déplacement de la bille, lorsque le pêne est verrouillé ;
- les moyens de déplacement de la bille comprennent un levier monté pivotant autour d'un axe qui est perpendiculaire à la direction de vissage/dévissage de la bague et qui est solidaire du corps de verrouillage, le levier étant déplaçable entre une position de libération du pêne, dans laquelle la bille est escamotée, et une position de verrouillage du pêne vers laquelle il est sollicité élastiquement et dans laquelle la bille est saillante, et les moyens d'interdiction de déplacement comprennent des butées complémentaires de limitation du pivotement du levier ménagées sur ce levier et la bague de blocage ;
- une première butée de limitation de pivotement est délimitée par un doigt prolongeant le levier, et une seconde butée de limitation de pivotement est délimitée par un contour saillant de la périphérie de la bague succédant à un contour rentrant de cette périphérie formant une encoche, cette encoche permettant au levier d'atteindre sa position de libération ;
- les moyens de déplacement de la bille comprennent en outre une aiguille de déplacement de la bille montée coulissante dans un alésage axial ménagé dans le corps de verrouillage, de manière à communiquer avec un canal radial qui est ménagé dans le corps de verrouillage et dans lequel est logée la bille, l'aiguille comportant une extrémité externe au corps de verrouillage articulée sur le levier entre une extrémité de manoeuvre et une extrémité d'appui et d'articulation du levier ;
- le verrou comporte des moyens de limitation de la course de vissage/dévissage de la bague de blocage ;
- les moyens de limitation de la course de vissage/dévissage comprennent deux butées qui sont espacées angulairement, ménagées sur une face de la bague opposée à sa face de blocage et destinées à coopérer avec des butées complémentaires solidaires du corps de verrouillage ;
- la bague de blocage est prolongée par une poignée radiale de manoeuvre venue de matière avec la bague.

L'invention a également pour objet un agencement d'un verrou tel que défini ci-dessus, caractérisé en ce que le pêne est solidaire d'un pied d'un siège pour véhicule automobile et la gâche est solidaire d'un plancher du véhicule.

Suivant une autre caractéristique de cet agencement, le corps de verrouillage est fixé sur un organe d'extrémité de pied dans lequel sont ménagées les butées de limitation de la course de verrouillage/déverrouillage de la bague de blocage, cette bague étant vissée sur le corps de verrouillage avant fixation de celui-ci sur l'organe d'extrémité de pied.

L'invention sera mieux comprise à la lecture de la description qui va suivre donnée uniquement à titre d'exemple et faite en se référant aux dessins annexés dans lesquels :
- la figure 1 est une vue de côté d'un siège fixé sur un plancher de véhicule au moyen de verrous selon l'invention ;
- la figure 2 est une vue en coupe axiale d'un verrou selon l'invention, dans laquelle le pêne est libéré ;
- la figure 3 est une vue similaire à la figure 2, dans laquelle le pêne est verrouillé ;
- la figure 4 est une vue en perspective du verrou de la figure 2, dans laquelle le pêne est libéré;
- la figure 5 est une vue similaire à la figure 4, dans laquelle le pêne est verrouillé ;
- la figure 6 est une vue en coupe suivant la ligne 6-6 de la figure 3.

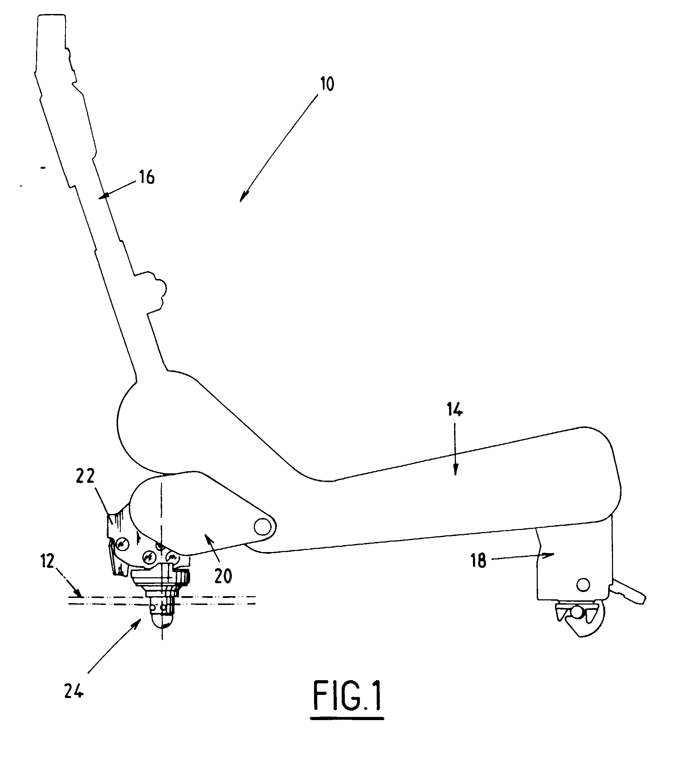

On a représenté sur la figure 1 un siège formant banquette 10 accroché de façon amovible sur un plancher 12 de l'habitacle d'un véhicule automobile.

On reconnaît sur cette figure une structure d'assise 14, une structure de dossier 16, une paire de pieds avant 18, dont un seul est représenté, et une paire de pieds arrière 20, dont un seul est représenté.

Les pieds avant 18 sont accrochés au plancher 12 à l'aide de moyens classiques.

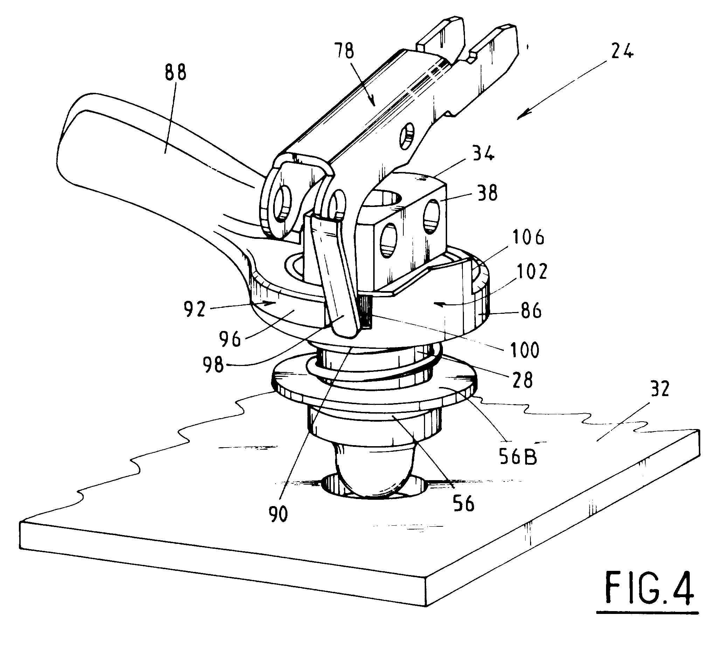

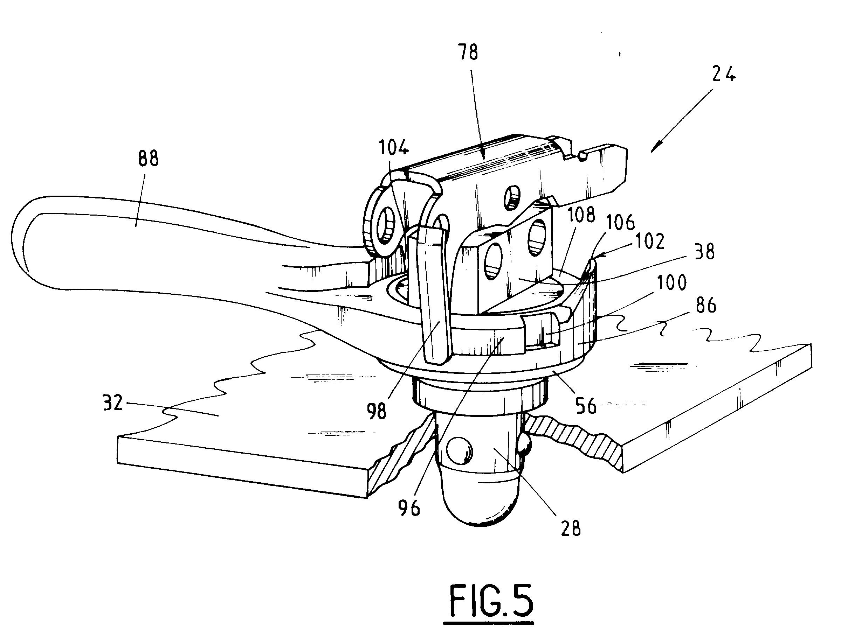

Chaque pied arrière 20 comprend un organe d'extrémité 22 sur lequel est fixé un verrou 24 selon l'invention. Pour des raisons de clarté, l'organe d'extrémité 22 du pied n'a pas été représenté sur les figures 4 et 5.

Le siège 10 est mis en place dans l'habitacle en accrochant tout d'abord les pieds avant 18 puis les pieds arrière 20 sur le plancher.

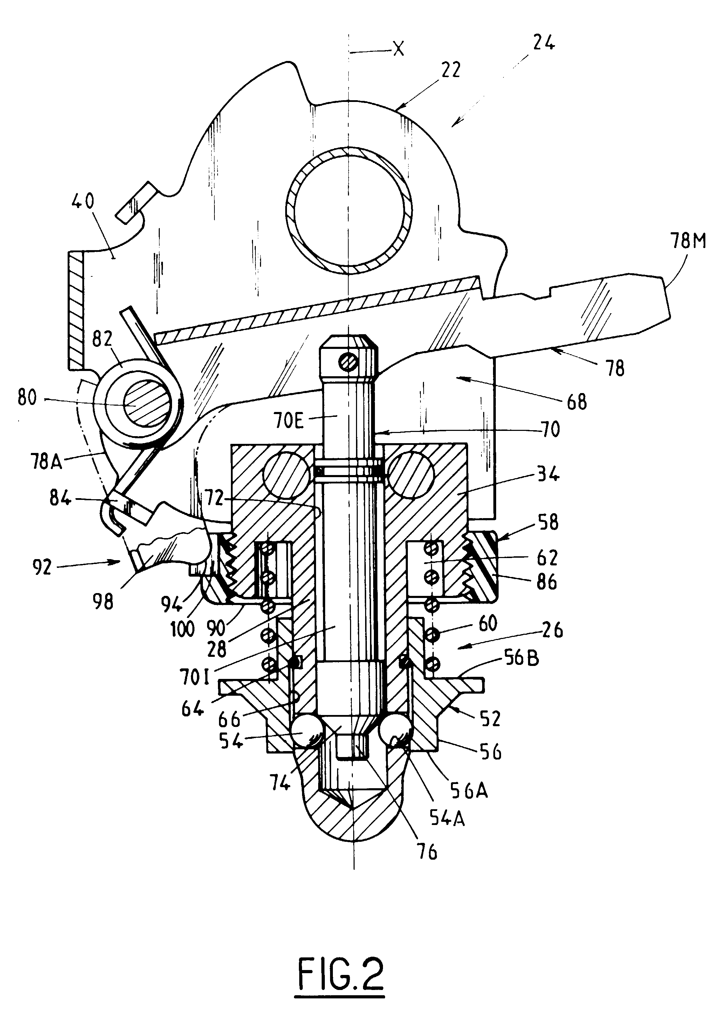

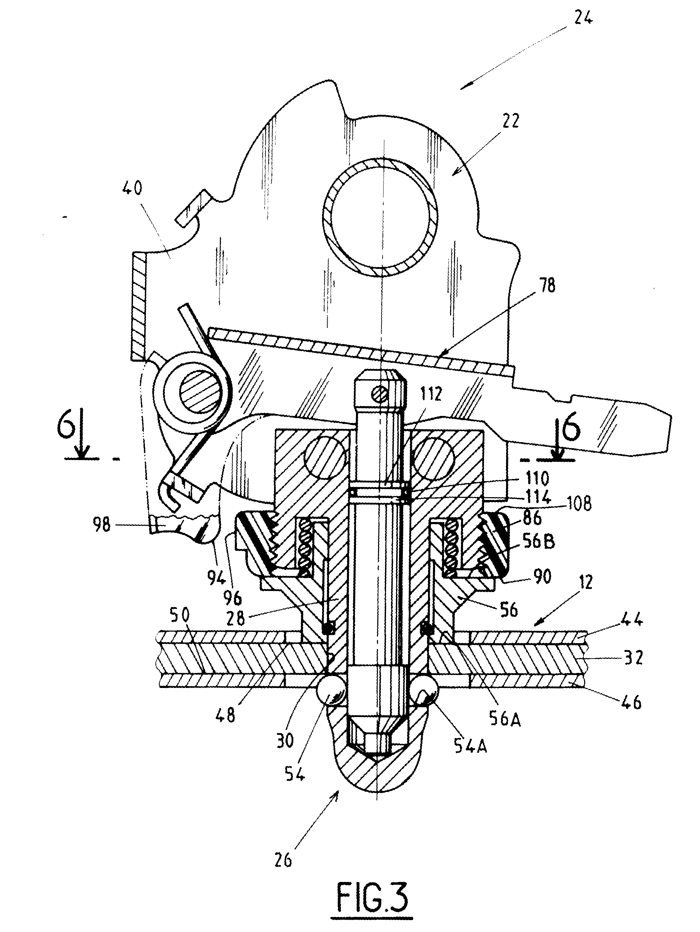

En se référant aux figures 2 à 5, on voit que le verrou 24 comprend un pêne 26 muni d'un corps de verrouillage 28 en forme générale de broche cylindrique, destiné à être verrouillé par encliquetage dans un orifice de verrouillage 30 de forme complémentaire, ménagé dans une gâche 32 illustrée aux figures 3 à 5.

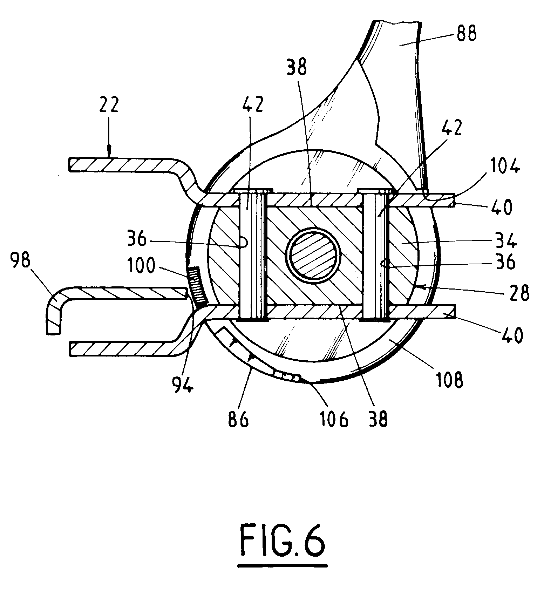

Le corps de verrouillage 28 comporte une tête de fixation 34 munie de deux perçages transversaux 36 débouchant dans deux méplats opposés 38 (voir figure 6).

La tête 34 est accrochée entre deux parties formant flasques 40 de l'organe 22, par des moyens connus en soi, par exemple des rivets 42 logés dans les perçages 36.

La gâche 32 a une forme générale de plaque. Elle est fixée de façon connue en soi au plancher 12 du véhicule, par exemple entre deux parois 44,46 délimitant ce dernier.

L'orifice de verrouillage 30 s'étend entre deux faces opposées 48,50 de la gâche.

Le corps de verrouillage 28 comprend des moyens 52 d'appui axial destinés à coopérer avec une première face 48 de la gâche, dite face d'appui, et des billes de verrouillage escamotables 54 destinées à coopérer avec la seconde face 50 de la gâche, dite face de verrouillage.

Dans l'exemple décrit, le pêne 26 comporte trois billes 54 logées dans des canaux radiaux 54A espacés angulairement, ménagés dans le corps de verrouillage 28. En variante, le pêne 26 peut comporter un plus petit ou un plus grand nombre de billes.

Les moyens d'appui axial 52 comprennent une douille d'appui 56 montée coulissante axialement autour du corps de verrouillage 28.

La douille 56 comporte une première face formant extrémité d'appui 56A, destinée à coopérer avec la face d'appui 48 de la gâche, et une seconde face formant extrémité de blocage 56B, destinée à coopérer avec des moyens de blocage 58 portés par le corps de verrouillage 28. Ces moyens 58 seront décrits ultérieurement.

Un ressort de rappel 60, en appui sur l'extrémité de blocage 56B de la douille et sur le fond d'un évidement annulaire 62 ménagé dans la tête 34, sollicite la douille 56 vers une position de libération du pêne 26 qui sera décrite ultérieurement.

La douille d'appui 56 est retenue en position de libération du pêne 26 par un anneau d'arrêt 64 qui est porté par le corps de verrouillage 28 et qui est destiné à coopérer avec une extrémité d'un chambrage de dégagement 66 ménagé dans la surface interne de la douille 56.

Le pêne 26 comprend en outre des moyens 68 de déplacement radial des billes 54 entre une position escamotée de libération du pêne 26, représentée aux figures 2 et 4, et une position saillante de verrouillage de ce pêne, représentée aux figures 3 et 5, dans laquelle les billes coopèrent avec la face de verrouillage 50 de la gâche.

Les moyens de déplacement 68 comportent une aiguille 70 montée coulissante dans un alésage axial borgne 72 ménagé dans le corps de verrouillage 28 de façon à communiquer avec les canaux 54A. L'aiguille 70 s'étend partiellement à l'extérieur de l'alésage 72.

L'extrémité interne 70I est délimitée par une surface tronconique 74 convergeant vers le fond de l'alésage 72, de manière à former une rampe destinée à coopérer avec les billes 54 pour les solliciter radialement vers leur position saillante.

L'extrémité de petit diamètre de la rampe 74 est prolongée par un pilote axial 76 destiné à maintenir les billes 54 dans leurs canaux lorsque celles-ci sont en position escamotée.

L'extrémité externe 70E de l'aiguille est articulée de façon connue en soi sur un levier 78, entre une extrémité de manoeuvre 78M et une extrémité d'appui 78A de ce levier.

Le levier 78 a une section transversale en forme générale de U.

L'extrémité d'appui 78A du levier est montée pivotante autour d'une broche 80 fixée sur l'organe 22 entre les flasques 40 de ce dernier. La broche 80 matérialise un axe d'articulation perpendiculaire à l'axe X du corps de verrouillage 28.

Le levier 78 est déplaçable entre une position de déverrouillage du pêne 26 dans laquelle les billes 54 sont escamotées, et une position de verrouillage du pêne 26 dans laquelle les billes 54 sont saillantes. Le levier 78 est sollicité élastiquement vers cette dernière position par un ressort 82 qui est enroulé autour de la broche 80 et dont les extrémités sont appuyées l'une sur le levier 78 et l'autre sur un crochet 84 solidaire de l'organe 22 d'extrémité de pied.

L'aiguille 70 est donc sollicitée élastiquement vers le fond de l'alésage 72, de manière à déplacer les billes 54 vers leur position saillante sous l'effet du ressort de rappel 82.

Les moyens de blocage 58 comprennent une bague de blocage 86 vissée autour du corps de verrouillage 28 de manière à pouvoir être déplacée parallèlement à l'axe X de ce corps 28.

Comme on peut le voir sur les figures 4 à 6, la bague de blocage 86 est prolongée par une poignée radiale de manoeuvre 88 venue de matière avec la bague. La bague 86 et sa poignée 88 sont fabriquées par exemple en polymère renforcé.

La bague 86 est munie d'une face de blocage 90 destinée à être serrée, lorsque le pêne 26 est verrouillé, contre l'extrémité de blocage 56B de la douille, par vissage de la bague.

Le verrou 24 comporte de plus des moyens 92 d'interdiction de l'actionnement des moyens 68 de déplacement des billes lorsque le pêne 26 est verrouillé.

Les moyens d'interdiction 92 comprennent des butées complémentaires 94,96 de limitation de pivotement du levier 78, ménagées sur ce levier et la bague de blocage 86.

Une première butée 94 est délimitée par un doigt 98 prolongeant une aile du levier 78 à partir de son extrémité d'appui 78A. Une seconde butée 96 est délimitée par un contour saillant de la périphérie de la bague 86 succédant à un contour rentrant de cette périphérie formant une encoche 100 (voir notamment les figures 4 et 5).

Cette encoche 100 délimite un espace de dégagement du doigt de butée 98 permettant au levier 78 d'atteindre sa position de déverrouillage.

Le verrou 24 comporte également des moyens 102 de limitation de la course de vissage/dévissage de la bague de blocage 86.

Comme on peut le voir sur la figure 6, les moyens de limitation 102 comprennent deux butées 104,106 (l'une de limitation de dévissage et l'autre de limitation de vissage) qui sont espacées angulairement, ménagées sur une face 108 de la bague 86 opposée à sa face de blocage 90 et destinées à coopérer avec des butées complémentaires délimitées par les flasques 40 de l'organe 22. De préférence, les butées 104,106 limitent la rotation de la bague 86 à 60° environ.

On notera que la bague de blocage 86 est vissée sur le corps de verrouillage 28 avant fixation de celui-ci sur l'organe 22 d'extrémité de pied.

On a également représenté sur les figures un joint torique d'étanchéité 110 agencé autour de l'extrémité interne 70I de l'aiguille dans une gorge délimitée par deux saillies annulaires 112,114 de cette aiguille.

Le fonctionnement du verrou 24 est très simple et permet l'encliquetage automatique du pêne 26 dans la gâche 32, comme cela sera précisé ci-dessous.

On considère tout d'abord le verrou 24 dans la configuration initiale représentée aux figures 2 et 4, dans laquelle il est déverrouillé.

Dans cette configuration, la douille 56 est dans une position de libération du pêne 26 dans laquelle elle recouvre et protège les billes 54 en les retenant en position escamotée. La douille 56 est retenue dans cette position par l'anneau d'arrêt 64 qui s'oppose à la force élastique de rappel du ressort 60. Les billes 54 coopèrent avec la rampe 74 de manière à maintenir l'aiguille 70 et le levier 78 en position de déverrouillage.

Le doigt de butée 98 est engagé dans l'encoche 100 de la bague 86.

Pour verrouiller le pêne 26, on enfonce le corps de verrouillage 28 dans l'orifice de verrouillage 30 en poussant le pêne 26 vers la gâche 32. La face d'appui 48 de la gâche coopère alors avec l'extrémité d'appui 56A de la douille en sollicitant cette douille à l'encontre de la force de rappel du ressort 60.

La douille 56 est ainsi déplacée jusqu'à une position de verrouillage du pêne 26. La douille 56 étant écartée axialement des billes 54, ces dernières sont libérées. Sous l'effet de la force de rappel du ressort 82, le levier 78 pivote en se rabattant vers la tête 34 du corps de verrouillage et l'aiguille 70 s'enfonce dans l'alésage 72. La rampe 74 déplace les billes 54 vers leur position saillante de verrouillage du pêne. L'aiguille 70 est immobilisée, par coopération du pilote 76 avec le fond de l'alésage 72, dans une position active dans laquelle les billes 54 coopèrent avec le contour de l'aiguille 70 prolongeant axialement l'extrémité de grand diamètre de la rampe 74. Le verrouillage du pêne 26 est irréversible, sauf à soulever volontairement le levier 78 comme cela sera précisé ultérieurement.

L'enfoncement et le verrouillage du pêne 26 dans la gâche 32 se font à l'encontre de la force de rappel du ressort 60 exercée sur la douille. Toutefois, le poids du siège portant le pêne permet de compenser, au moins en partie, cette force de rappel.

Pour bloquer la douille 56, on fait tourner la bague de blocage 86, de manière que la face de blocage 90 de la bague vienne buter contre l'extrémité de blocage 56B de la douille afin de serrer celle-ci contre la gâche. De préférence, le pas de vis de la bague 86 est adapté pour que le blocage de la douille 56 soit obtenu par rotation de la bague d'environ un quart de tour.

Lorsque la bague de blocage 86 est serrée contre la douille 56, le doigt de butée 98 du levier est au droit du contour saillant 96 de la bague, si bien que le levier 78 ne peut être soulevé vers sa position de déverrouillage du pêne 26 (voir figures 3 et 5).

Pour déverrouiller le pêne 26, on desserre tout d'abord la bague de blocage 86 de manière à placer son encoche 100 au droit du doigt 98. Cette position du doigt 98 par rapport à l'encoche 100 est déterminée par la butée 104 de limitation de dévissage de la bague qui coopère avec un flasque 40 correspondant (voir figure 6).

Puis, on déplace le levier 78 en le soulevant vers sa position de déverrouillage à l'encontre de la force de rappel du ressort 82.

On soulève ainsi l'aiguille 70 de manière à placer la rampe 74 au droit des billes 54 qui peuvent alors s'escamoter. Le ressort 60 sollicite le pêne 26 à l'écart de la gâche 32 en repoussant la douille 56 vers sa position de libération du pêne représentée aux figures 2 et 4. La douille 56 a donc, au cours de l'opération de déverrouillage, une fonction d'éjecteur.

L'invention ne se limite pas au mode de réalisation illustré sur les figures.

En particulier, le pas de vis de la bague antiblocage 86 est indifféremment un pas à droite ou un pas à gauche. Dans le cas où le siège comporte deux pieds latéraux munis chacun d'un verrou selon l'invention, il est possible d'équiper un premier verrou avec une bague de blocage à pas à droite et un second verrou avec une bague de blocage à pas à gauche.

L'invention comporte de nombreux avantages.

En particulier, le verrou selon l'invention permet la fixation sans jeu d'une banquette sur un plancher de véhicule de planéité relativement grossière.

## Revendications

1. Verrou du type comprenant un pêne (26) comportant un corps de verrouillage (28) de forme générale cylindrique destiné à être verrouillé par encliquetage dans un orifice de verrouillage (30) ménagé entre deux faces opposées (48,50) d'une gâche (32), le pêne (26) comportant de plus des moyens d'encliquetage libérables comprenant, d'une part, une douille d'appui axial (56) munie d'une première extrémité d'appui (56A) destinée à coopérer avec une première face (48) de la gâche et d'une seconde extrémité de blocage (56B) destinée à coopérer avec des moyens de blocage portés par le corps de verrouillage (28), et d'autre part, au moins une bille de verrouillage escamotable (54) destinée à coopérer avec la seconde face (50) de la gâche, la douille d'appui (56) étant montée coulissante axialement autour du corps de verrouillage (28) en étant déplaçable à l'encontre d'une force élastique de rappel depuis une position de libération du pêne (26), dans laquelle la douille (56) recouvre la bille (54) en la retenant en position escamotée, vers une position de verrouillage du pêne (26), dans laquelle la douille (56) et la bille (54) enserrent la gâche (32), caractérisé en ce que les moyens de blocage comprennent une bague de blocage (86) vissée autour du corps de verrouillage (28), munie d'une face de blocage (90) destinée à être serrée, lorsque le pêne est verrouillé, contre l'extrémité de blocage (56B) de la douille, par vissage de la bague.

2. Verrou selon la revendication 1, caractérisé en ce qu'il comporte des moyens (68) de déplacement radial de la bille de verrouillage (54) entre une position escamotée de libération du pêne (26) et une position saillante de verrouillage de ce pêne vers laquelle la bille est sollicitée élastiquement et dans laquelle la bille coopère avec la seconde face (50) de la gâche, et des moyens (92) d'interdiction de l'actionnement des moyens (68) de déplacement de la bille, lorsque le pêne (26) est verrouillé.

3. Verrou selon la revendication 2, caractérisé en ce que les moyens (68) de déplacement de la bille comprennent un levier (78) monté pivotant autour d'un axe qui est perpendiculaire à la direction de vissage/dévissage de la bague (86) et qui est solidaire du corps de verrouillage (28), le levier (78) étant déplaçable entre une position de libération du pêne (26), dans laquelle la bille (54) est escamotée, et une position de verrouillage du pêne (26) vers laquelle il est sollicité élastiquement et dans laquelle la bille (54) est saillante, et en ce que les moyens d'interdiction de déplacement (92) comprennent des butées complémentaires (94,96) de limitation du pivotement du levier (78) ménagées sur ce levier et la bague de blocage (86).

4. Verrou selon la revendication 3, caractérisé en ce qu'une première butée (94) de limitation de pivotement est délimitée par un doigt (98) prolongeant le levier (78), et en ce qu'une seconde butée de limitation de pivotement est délimitée par un contour saillant (96) de la périphérie de la bague succédant à un contour rentrant de cette périphérie formant une encoche (100), cette encoche permettant au levier (78) d'atteindre sa position de libération.

5. Verrou selon la revendication 3 ou 4, caractérisé en ce que les moyens (68) de déplacement de la bille (54) comprennent en outre une aiguille (70) de déplacement de la bille montée coulissante dans un alésage axial (72) ménagé dans le corps de verrouillage (78), de manière à communiquer avec un canal radial (54A) qui est ménagé dans le corps de verrouillage (28) et dans lequel est logée la bille, l'aiguille comportant une extrémité (70E) externe au corps de verrouillage articulée sur le levier (78) entre une extrémité de manoeuvre (78M) et une extrémité d'appui et d'articulation (78A) du levier.

6. Verrou selon l'une quelconque des revendications précédentes, caractérisé en ce qu'il comporte des moyens (102) de limitation de la course de vissage/dévissage de la bague de blocage (86).

7. Verrou selon la revendication 6, caractérisé en ce que les moyens (102) de limitation de la course de vissage/dévissage comprennent deux butées (104,106) qui sont espacées angulairement, ménagées sur une face (108) de la bague (86) opposée à sa face de blocage (90) et destinées à coopérer avec des butées complémentaires (40) solidaires du corps de verrouillage.

8. Verrou selon l'une quelconque des revendications précédentes, caractérisé en ce que la bague de blocage (86) est prolongée par une poignée radiale de manoeuvre (88) venue de matière avec la bague.

9. Agencement d'un verrou selon l'une quelconque des revendications précédentes, caractérisé en ce que le pêne (26) est solidaire d'un pied (20) d'un siège (10) pour véhicule automobile et la gâche (32) est solidaire d'un plancher (12) du véhicule.

10. Agencement selon la revendication 9, caractérisé en ce que le corps de verrouillage (28) est fixé sur un organe (22) d'extrémité de pied dans lequel sont ménagées les butées (40) de limitation de la course de verrouillage/déverrouillage de la bague de blocage (86), cette bague étant vissée sur le corps de verrouillage (28) avant fixation de celui-ci sur l'organe (22) d'extrémité de pied.

## Patentansprüche

1. Verriegelung des Typs mit einem Riegel (26), der einen Verriegelungskörper (28) mit im allgemeinen zylindrischer Form enthält, der dazu bestimmt ist, durch Einrasten in einer Verriegelungsöffnung (30), die zwischen zwei gegenüberliegenden Flächen (48, 50) eines Schließhakens (32) ausgespart ist, verriegelt zu werden, wobei der Riegel (26) außerdem freigebbare Einrastmittel enthält, die einerseits eine Axialabstützhülse (56) aufweisen, die mit einem ersten Abstützende (56A), das dazu bestimmt ist, mit einer ersten Fläche (48) des Schließhakens zusammenzuwirken, und mit einem zweiten Blockierungsende (56B), das dazu bestimmt ist, mit vom Verriegelungskörper (28) getragenen Blockierungsmitteln zusammenzuwirken, versehen ist, und andererseits wenigstens eine versenkbare Verriegelungskugel (54) aufweisen, die dazu bestimmt ist, mit der zweiten Fläche (50) des Schließhakens zusammenzuwirken, wobei die Abstützhülse (56) um den Verriegelungskörper (28) axial gleitend angebracht ist, indem sie entgegen einer elastischen Rückstellkraft aus einer Position zur Freigabe des Riegels (26), in der die Hülse (56) die Kugel (54) abdeckt, indem sie sie in der versenkten Position hält, in eine Position zur Verriegelung des Riegels (26), in der die Hülse (56) und die Kugel (54) den Schließhaken (32) einklemmen, verschiebbar ist, dadurch gekennzeichnet, daß die Blockierungsmittel einen Blockierungsring (86) aufweisen, der auf den Verriegelungskörper (28) geschraubt ist und mit einer Blockierungsfläche (90) versehen ist, die dazu bestimmt ist, durch Aufschrauben des Rings gegen das Blockierungsende (56B) der Hülse geklemmt zu werden, wenn der Riegel verriegelt ist.

2. Verriegelung nach Anspruch 1, dadurch gekennzeichnet, daß sie Mittel (68) zum radialen Verschieben der Verriegelungskugel (54) zwischen einer versenkten Position zur Freigabe des Riegels (26) und einer vorstehenden Position zur Verriegelung dieses Riegels, in der die Kugel elastisch vorbelastet ist und in der die Kugel mit der zweiten Fläche (50) des Schließhakens zusammenwirkt, sowie Mittel (92), die die Betätigung der Mittel (68) zur Verschiebung der Kugel bei verriegeltem Riegel (26) verhindern, enthält.

3. Verriegelung nach Anspruch 2, dadurch gekennzeichnet, daß die Mittel (68) zur Verschiebung der Kugel einen Hebel (78) aufweisen, der um eine zur Richtung des Aufschraubens/Abschraubens des Rings (86) senkrechte Achse schwenkbar angebracht ist und mit dem Verriegelungskörper (28) fest verbunden ist, wobei der Hebel (78) zwischen einer Position zur Freigabe des Riegels (26), in der die Kugel (54) versenkt ist, und einer Position zur Verriegelung des Riegels (26), in die er elastisch vorbelastet ist und in der die Kugel (54) vorsteht, verschiebbar ist, und daß die Verschiebungverhinderungsmittel (92) komplementäre Anschläge (94, 96) zur Begrenzung der Schwenkung des Hebels (78) aufweisen, die an diesem Hebel und am Blockierungsring (86) ausgespart sind.

4. Verriegelung nach Anspruch 3, dadurch gekennzeichnet, daß ein erster Schwenkbegrenzungsanschlag (94) durch einen den Hebel (78) verlängernden Zapfen (98) begrenzt ist und daß ein zweiter Schwenkbegrenzungsanschlag durch einen vorspringenden Umriß (96) des Umfangs des Rings, der einem eine Kerbe (100) bildenden zurückspringenden Umriß dieses Umfangs folgt, begrenzt ist, wobei diese Kerbe dem Hebel (78) ermöglicht, seine Freigabeposition einzunehmen.

5. Verriegelung nach Anspruch 3 oder 4, dadurch gekennzeichnet, daß die Mittel (68) zur Verschiebung der Kugel (54) außerdem eine Nadel (70) zur Verschiebung der Kugel umfassen, die in einer axialen Bohrung (72) angebracht ist, welche im Verriegelungskörper (78) in der Weise ausgespart ist, daß sie mit einem radialen Kanal (54A) in Verbindung steht, der im Verriegelungskörper (28) ausgespart ist und in dem sich die Kugel befindet, wobei die Nadel ein Ende (70E) außerhalb des Verriegelungskörpers besitzt, das am Hebel (78) zwischen einem Betätigungsende (78M) und einem Abstütz- und Schwenkende (78A) des Hebels angelenkt ist.

6. Verriegelung nach irgendeinem der vorangehenden Ansprüche, dadurch gekennzeichnet, daß sie Mittel (102) zur Begrenzung des Aufschraub-/Abschraubhubes des Blockierungsrings (86) enthält.

7. Verriegelung nach Anspruch 6, dadurch gekennzeichnet, daß die Mittel (102) zur Begrenzung des Aufschraub-/Abschraubhubes zwei Anschläge (104, 106) enthalten, die in Winkelrichtung beabstandet sind und in einer Fläche (108) des Rings (86) gegenüber der Blockierungsfläche (90) ausgespart sind und dazu bestimmt sind, mit den komplementären Anschlägen (40), die mit dem Verriegelungskörper fest verbunden sind, zusammenzuwirken.

8. Verriegelung nach irgendeinem der vorangehenden Ansprüche, dadurch gekennzeichnet, daß der Blockierungsring (86) durch einen radialen Betätigungsgriff (88), der einteilig mit dem Ring ausgebildet ist, verlängert ist.

9. Anordnung einer Verriegelung nach irgendeinem der vorangehenden Ansprüche, dadurch gekennzeichnet, daß der Riegel (26) mit einem Fuß (20) eines Kraftfahrzeugsitzes (10) fest verbunden ist und der Schließhaken (32) mit einem Boden (12) des Fahrzeugs fest verbunden ist.

10. Anordnung nach Anspruch 9, dadurch gekennzeichnet, daß der Verriegelungskörper (28) an einem Endorgan (22) des Fußes befestigt ist, in dem die Anschläge (40) zur Begrenzung des Verriegelungs-/Entriegelungshubes des Blockierungsrings (86) ausgespart sind, wobei dieser Ring auf den Verriegelungskörper (28) vor dessen Befestigung an dem Fuß-Endorgan (22) geschraubt wird.

## Claims

1. Lock of the type consisting of a bolt (26) comprising a locking body (28) of general cylindrical shape intended to be locked by a ratchet motion in a locking orifice (30) provided between two opposed faces (48, 50) of a keeper (32), the bolt (26) in addition comprising releasable ratchet-motion means comprising, on the one hand, an axial support socket (56) provided with a first support end (56A) intended to cooperate with a first face (48) of the keeper and with a second locking end (56B) intended to cooperate with locking means supported by the locking body (28), and on the other hand, at least one retractable locking ball (54) intended to cooperate with the second face (50) of the keeper, the support socket (56) being mounted to slide axially around the locking body (28) whilst being displaceable against the action of a resilient return force from a position for releasing the bolt (26), in which the socket (56) covers the ball (54) whilst keeping it in the retracted position, towards a position for locking the bolt (26), in which the socket (56) and the ball (54) enclose the keeper (32), characterised in that the locking means comprise a locking ring (86) screwed around the locking body (28), provided with a locking face (90) intended to be clamped, when the bolt is locked, against the locking end (56B) of the socket, by screwing of the ring.

2. Lock according to Claim 1, characterised in that it comprises means (68) for the radial displacement of the locking ball (54) between a retracted position releasing the bolt (26) and a projecting position locking this bolt, towards which the ball is biased elastically and in which the ball cooperates with the second face (50) of the keeper, and means (92) for preventing the actuation of the means (68) for the displacement of the ball, when the bolt (26) is locked.

3. Lock according to Claim 2, characterised in that the means (68) for the displacement of the ball comprise a lever (78) mounted to pivot about a pin which is perpendicular to the screwing/unscrewing direction of the ring (86) and which is integral with the locking body (28), the lever (78) being displaceable between a position for releasing the bolt (26), in which the ball (54) is retracted, and a position for locking the bolt (26), towards which it is biased elastically and in which the ball (54) projects, and in that the means (92) for preventing displacement comprise complementary abutments (94, 96) for limiting the pivoting of the lever (78) provided on this lever and the locking ring (86).

4. Lock according to Claim 3, characterised in that a first abutment (94) for limiting pivoting is defined by a finger (98) extending the lever (78), and in that a second abutment for limiting pivoting is defined by a projecting contour (96) of the periphery of the ring following a re-entrant contour of this periphery forming a notch (100), this notch allowing the lever (78) to reach its release position.

5. Lock according to Claim 3 or 4, characterised in that the means (68) for the displacement of the ball (54) moreover comprise a spindle (70) for the displacement of the ball mounted to slide in an axial bore (72) provided in the locking body (78), in order to communicate with a radial channel (54A) which is provided in the locking body (28) and in which the ball is housed, the spindle comprising an end (70E) outside the locking body, pivoted on the lever (78) between an operating end (78M) and an end (78A) for supporting and pivoting of the lever.

6. Lock according to one of the preceding Claims, characterised in that it comprises means (102) for limiting the screwing/unscrewing travel of the locking ring (86).

7. Lock according to Claim 6, characterised in that the means (102) for limiting the screwing/unscrewing travel comprise two abutments (104, 106) which are spaced apart angularly, provided on one face (108) of the ring (86) opposite its locking face (90) and intended to cooperate with complementary abutments (40) integral with the locking body.

8. Lock according to one of the preceding Claims, characterised in that the locking ring (86) is extended by a radial operating handle (88) integral with the ring.

9. Arrangement of a lock according to one of the preceding Claims, characterised in that the bolt (26) is integral with a foot (20) of a car seat (10) and the keeper (32) is integral with the floor (12) of the vehicle.

10. Arrangement according to Claim 9, characterised in that the locking body (28) is fixed to a member (22) at the end of the foot, in which are provided the abutments (40) for limiting the locking/unlocking travel of the locking ring (86), this ring being screwed to the locking body (28) before fixing the latter to the member (22) of the end of the foot.
